# EUROPEAN PATENT SPECIFICATION

(11) **EP 3 965 432 B1**
(45) Date of publication and mention of the grant of the patent: **05.07.2023**
(21) Application number: 21197941.4
(22) Date of filing: 28.05.2018
(51) Int. Cl.: H04Q 1/02

(54) **METHOD FOR MOUNTING A PANEL WITHIN A WIRING CABINET AND WIRING CABINET**
VERFAHREN ZUM ANBRINGEN EINER PLATTE IN EINEM SCHALTSCHRANK UND SCHALTSCHRANK
PROCÉDÉ DE MONTAGE D'UN PANNEAU À L'INTÉRIEUR D'UNE ARMOIRE DE CÂBLAGE ET ARMOIRE DE CÂBLAGE

(43) Date of publication of application: 09.03.2022
(62) Divisional of application: 18174609.0
(73) Proprietor: ELDON Group, 28223 Madrid (ES)
(72) Inventor: Ramos, David, Madrid (ES); Rodriguez Salvador, Jose Antonio, Majadahonda 28220 (ES)
(74) Representative: Grünecker Patent- und Rechtsanwälte PartG mbB

(56) References cited:
- EP-A1- 0 104 512
- WO-A2-2012/149089
- US-A- 4 840 285
- US-A1- 2017 127 555
- US-B1- 7 564 696

## Description

This invention relates generally to a method for detaching a panel from a wiring cabinet and a wiring cabinet.

EP 0 901 207 A1 discloses a method for mounting a panel within a wiring cabinet, the first fastening element is formed by a set screw, which interacts with a cage nut that is attached to the attachment element. This method involves a series of laborious assembly steps, that are not only time consuming, but can also require the attachment element to be accessible from the rear side for the insertion of the cage nut.

WO 2012/149089 A2 discloses another method for mounting a panel to a wiring cabinet.

The present invention's object is to provide a time-saving method for easily mounting a panel within a wiring cabinet, so that the panel can be easily attached from the front side.

The invention is defined in claim 1.

Advantageous embodiments of this invention are subject of the subclaims.

In a preferred embodiment, the first fastening element is a snap-fastener, wherein the snap-fastener has a release mechanism for the purpose of detaching the panel from the attachment element, wherein the release mechanism is actuatable from the direction of the front surface of the panel.

The snap-fastener directly arrests the panel in its completely mounted position, so that the panel can be installed by a single movement. The release mechanism of the snap-fastener also allows it to be easily disengaged from the attachment element, so that the panel can be disassembled from the wiring cabinet.

Preferably, the second mounting element is a round bar, wherein in a premounted state of the panel, the round bar serves as a rotation axis for the purpose of rotating the panel. This allows the panel to be easily rotated in order to mount it to the wiring cabinet.

Preferably, the round bar has at least one groove suitable for receiving the first mounting element. This aids keeping the panel from moving sideways and helps to align the snap-fastener with the opening in the attachment element.

Preferably, after mounting the panel to the second mounting element, the snap-fastener is preassembled to the panel, after which the panel is rotated into a completely mounted state, so that the snap-fastener interacts with the retaining surface, so that the panel is retained in the completely mounted state. The procedure of mounting and attaching the panel to the wiring cabinet is therefore completed by a single pivoting movement, wherein the snap-fastener directly retains the panel in its final mounted position.

Preferably, the panel has at least one standing seam, wherein the standing seam has a slot for receiving the second mounting element, so that the first mounting element is formed by the slot. This simplifies the design of the panel and allows for a simple sheet metal construction for the panel.

Preferably, the attachment element is mounted to at least one frame element of the wiring cabinet.

Preferably, the frame element of the wiring cabinet is arranged in a horizontal orientation, so that the attachment surface of the mounted attachment element is perpendicular to the frame element. This allows a more flexible application of the panel within the wiring cabinet, as the attachment element can be directly mounted to a location remote to the boundaries of the wiring cabinet.

Preferably, that the attachment element has at least one retaining element, wherein the attachment element in a premounted position is held undetachably to the frame element by the interaction of the retaining element with an opening of the frame element. The attachment element is therefore secured against inadvertent removal after being premounted to the frame element, which simplifies its mounting process.

Preferably, the attachment element in a completely mounted position is attached to at least one frame element by means of at least one second fastening element.

Preferably, the second fastening element is a snap-fastener, wherein the snap-fastener has a release mechanism for the purpose of detaching the attachment element from the frame element. This further simplifies the assembly of the attachment element, as it can be easily attached to and detached from the wiring cabinet.

Preferably, the attachment element has at least one securing element, wherein in a completely mounted position of the attachment element, the securing element restricts the movement of the attachment element in at least one direction. This enhances the stability of the attachment element in a completely mounted position. Especially in combination with a snap-fastener as fastening element, the securing element allows the second fastening element to be combined with a opening in the frame element, that is larger than the fastening element in at least one dimension, wherein the securing element prevents movement of the second fastening element in this dimension.

Preferably, the attachment element is a metal sheet element, wherein the metal sheet element has a main body with a first surface that is in direct contact with at least one frame element the attachment element is mounted to, wherein the main body has an opening for receiving the second fastening element, wherein the attachment surface of the attachment element are formed by a first tab, which has an opening suitable for receiving the first fastening element, wherein the retaining element is formed by a second tab, wherein the second tab has a lug, which engages an opening of the frame element in such a way, that the attachment element in a premounted position is held undetachably to the frame element, wherein the second tab with the lug has a length exceeding the dimension of the opening in the frame element, wherein the securing element is formed by a third tab.

Preferably, the frame element has a row of openings, wherein the openings are suitable for receiving the retaining element, for receiving the securing element, and for receiving the second fastening element.

Preferably, the wiring cabinet is comprised of at least two cabinet elements, wherein in a completely mounted state the panel overlaps the connection point of the two cabinet elements.

Preferably, the attachment element is mounted to a first frame element of a first cabinet element and to a second frame element of a second cabinet element, so that in a completely mounted position of the attachment element, the first frame element and the second frame element are interconnected by means of the attachment element.

Preferably, the panel in a completely mounted state is adjacent to at least one secondary panel, so that the front surface of the panel is flush with the front side of the secondary panel.

Preferably, the first cabinet element contains a first secondary panel and the second cabinet element contains a second secondary panel, wherein the first and second secondary panel are orientated in such a way, that the front side of the first secondary panel and the front side of the second secondary panel are in the same plane, wherein the panel in a completely mounted state conceals the gap between the first secondary panel and the second secondary panel in such a way, that the front side of the panel is flush with the front side of the first secondary panel and the front side of the second secondary panel.

Preferably, the secondary panel has a standing seam, wherein the standing seam has a hole for receiving the round bar, wherein the round bar is supported on at least one end by the standing seam of the secondary panel.

The present invention also provides a wiring cabinet according to the features of the independent claim 10.

An example of the execution of this invention is explained in detail in the following drawings.
Figure 1 shows a compilation of a preferred embodiment of the panel with the components used for mounting it within a wiring cabinet.
Figure 2 shows a detailed view of the first end of the panel and a preferred embodiment of the method for mounting the panel with its first end to a second mounting element.
Figure 3 shows a detailed view of the second end of the panel and a preferred embodiment of the method for attaching the panel with its second end to an attachment element.
Figure 4 shows the connection between the attachment element and the control cabinet frame in a premounted position of the attachment element.
Figure 5 shows the connection of the second mounting element to the wiring cabinet frame.
Figure 6 illustrates the interaction of the first mounting element and the second mounting element
For the following explanations, the same parts are designated by the same reference signs. If a Figure contains reference signs that are not described in more detail in the corresponding description of the Figure, reference is made to preceding or subsequent descriptions of the Figure.

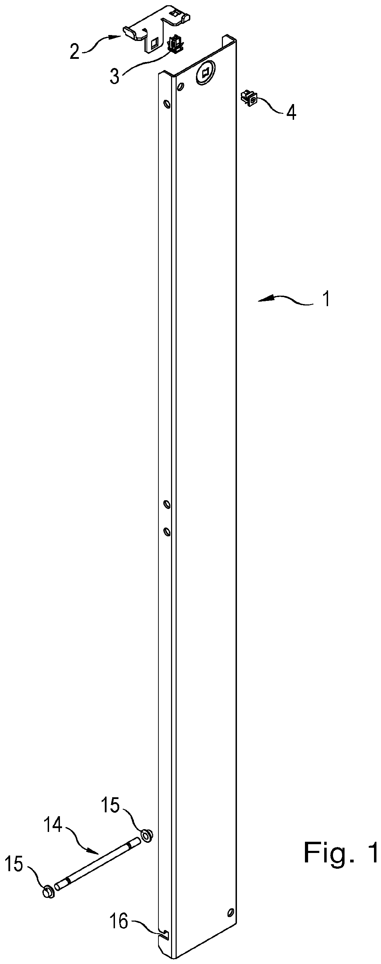

Figure 1 shows the panel 1 with an attachment element 2 and the second mounting element in the form of a round bar 14, which has a flanged bushing 15 attached to each of its ends. The first end of the panel 1 has a first mounting element in the form of a slot 16, which is integrated into a standing seam of the panel 10. The attachment element 2 for attaching the panel 1 to by means of a first fastening element 4 has a second fastening element 3 for attaching the attachment element 2 to a frame element 25 of the wiring cabinet 19.

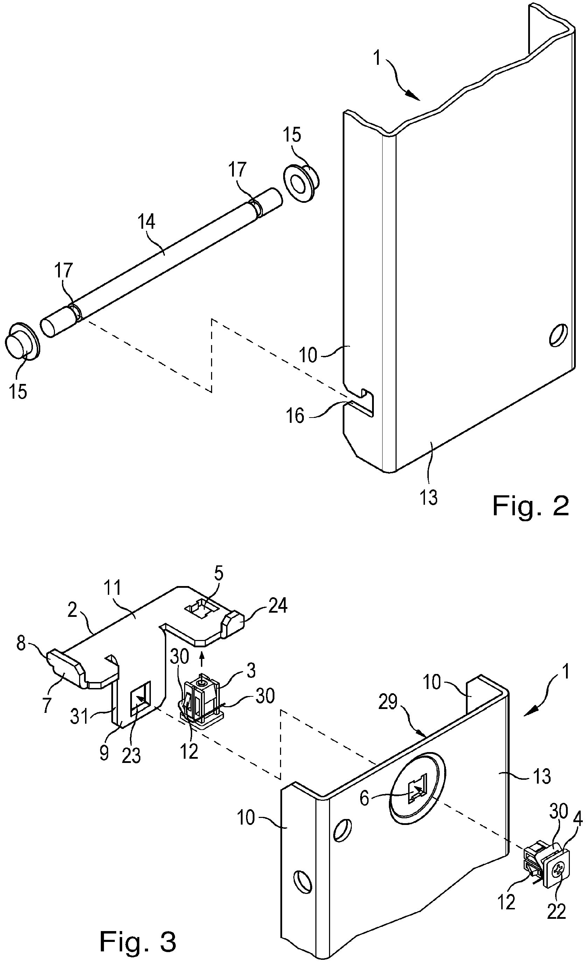

As shown in Figure 2, the round bar 14 has two grooves 17 for receiving the slots 16 in the standing seams 10 of the panel 1. The panel 1 is supported with the slots 16 in the grooves 17 in such a way that it cannot slip in the installation direction or in the direction of the axis of the round bar 14. The flanged bushings 15 attached to both ends of the round bar 14 separate the standing seams 10 of the panel from adjacent components of the wiring cabinet 19, and also support the round bar 14 in its mounted position within the wiring cabinet 19.

Figure 3 shows the step of attaching the panel 1 to the attachment element 2, which is formed by a metal sheet element, by means of the first fastening element in form of a first snap fastener 4. The first snap fastener 4 is inserted through an opening 6 into the panel 1, whereupon the first snap fastener 4 is inserted through a first opening 23 in the attachment element 2.

The retaining clamps 12 of the first snap fastener 4 thereby retain the panel 1 to the attachment element 2, wherein the first snap fastener 4 is pretensioned by two leaf springs 30. The retaining clamps 12 of the first snap fastener can be retracted by the use of an actuation mechanism in the form of a set screw 22, so that the retaining clamps 12 and the set screw 22 work together in the form of a release mechanism for the snap fastener. The screw head of the set screw 22 is thereby accessible from the front side 13 of the panel 1.

The rear surface 29 of the panel 1 in a completely mounted state is in direct contact with the attachment surface 9 of the attachment element 2, whereby the attachment surface 9 is formed by a first tab 31, which is bent by 90° against the main body 11 of the attachment element 2.

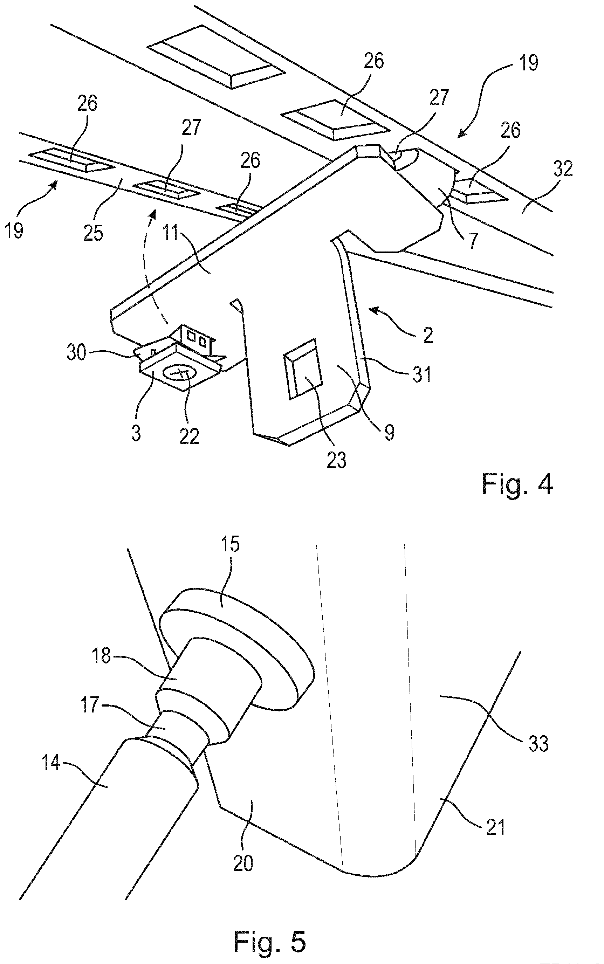

As shown in Figure 4, the retaining element in form of a second tab 7 of the attachment element 2 retains the attachment element 2 in a premounted position. The second tab 7 has a lug 8, which together with the second tab 7 can be engaged with an opening 27 of a first frame element 32, which has a row 26 of identical openings 27. The combined length of the second tab 7 and the lug 8 extends over the length of the opening 27, so that the attachment element 2 in a premounted position is held undetachably to the first frame element 32 by the lug 8.

The attachment element has a second opening 5 for receiving a second fastening element in form of a second snap fastener 3, which is identical in construction to the first snap fastener 4. In a completely mounted position of the attachment element 2 the second snap fastener 3 retains the attachment element 2 with its main body 11 to a second frame element 25, wherein the second snap fastener 3 with its retaining clamps 12 engages with an opening 27 in the second frame element 25. The securing element in form of a third tab 24 of the attachment element 2 restricts its freedom of movement by securing it against one of the holes 27 of the second frame element 25.

As shown in figure 5, an end section 18 of the round bar 14 is inserted into a flanged bushing 15. The flanged bushing 15 in turn is inserted into a hole in a standing seam 20 of a secondary panel 21. The flanged bushing 15 increases the diameter of the round bar 14, so that it fits the diameter of the hole in the standing seam 20. The diameter of the round bar 14 is smaller than that of the hole to ensure sufficient backlash for the round bar 14, so it can be easily inserted between two standing seams 20. The end section 18 is preferably corrugated to ensure a good connection to the flanged bushings 15.

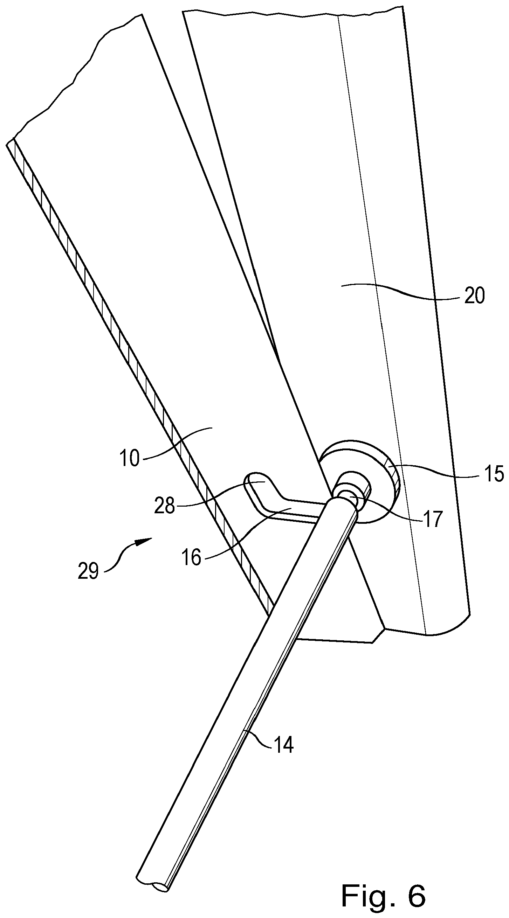

As shown in figure 6, the collar of the flanged bushing 15 is flush with the groove 17 of the round bar 14, so that the standing seam 10 of the panel 1 is separated from the standing seam 20 of the adjacent secondary panel 21. For mounting the panel 1 to the round bar 14, the panel 1 is inserted with the slot 16 onto the round bar 14, wherein the round slot 16 has a recess 28, in which the round bar 14 is held in a rotatable position, so that the slot 16 and the round bar 14 interact as tilting mechanism. In a completely mounted state of the panel 1, the front surface 13 of the panel 1 is flush with the front surface 33 of the adjacent secondary panel 21.

The skilled person will appreciate that the invention is not limited to the above embodiment. Instead of having the first mounting element in the form of a slot in a standing seam and the second mounting element in the form of a round bar, a corresponding tilting mechanism can also be formed by a hitch as the first mounting element and a grommet as the second mounting element.

## Claims

1. A method of detaching a panel (1) in a completely-mounted state from a wiring cabinet (19), the panel defining a first end and a second end, the method comprising:
turning a screw head of a first fastening element (4) to release the second end of the panel from an attachment element (2) so that the panel (1) is in a pre-mounted state, wherein in the completely-mounted state, a rear surface (29) of the panel (1) is in contact with an attachment surface (9) of the attachment element (2) and the first fastening element (4) retains the panel (1) to the attachment element (2) at the second end of the panel, and wherein in the pre-mounted state the panel is rotatable relative to the wiring cabinet; and
from the pre-mounted state, detaching a first mounting element (16) located at the first end of the panel (1) from a second mounting element (14) of the wiring cabinet (19) to detach the panel from the wiring cabinet.

2. The method of claim 1, wherein the attachment surface (9) of the attachment element (2) has at least one opening (23) suitable for receiving the first fastening element (4), and wherein a front surface (13) of the panel (1) has at least one opening (6) located at the second end of the panel for receiving the first fastening element.

3. The method of either of claims 1 or 2, wherein the first fastening element (4) is a snap-fastener having a release mechanism (12, 22), and wherein the release mechanism is actuatable via the screw head from a front surface (13) of the panel (1).

4. The method of any of claims 1 through 3, further comprising:
turning a screw head of a second fastening element (3) to release the attachment element (2) from a frame element (25) of the wiring cabinet (19).

5. The method of claim 4, wherein releasing the attachment element (2) from the frame element (25) of the wiring cabinet (19) includes removing the second fastening element (3) from a second opening (5) of the attachment element (2).

6. The method of either of claims 4 or 5, wherein each of the first fastening element (4) and the second fastening element (3) are pretensioned by leaf springs (30).

7. The method of any of claims 1 through 6, wherein the attachment surface (9) of the attachment element (2) is formed by a first tab (31), which is bent by 90 degrees against a main body (11) of the attachment element (2).

8. The method of claim 7, wherein the attachment element (2) includes a second tab (7) having a lug (8) for retaining the attachment element (2) to a first frame element (32) of the wiring cabinet (19).

9. The method of claim 8, wherein the attachment element (2) includes a third tab (24) for restricting movement of the attachment element (2) relative to the wiring cabinet (19).

10. A wiring cabinet (19) comprising,
a panel (1) having a first end and a second end;
a first mounting element (16) located at the first end of the panel;
a second mounting element (14) of the wiring cabinet (19), the first mounting element and the second mounting element interacting as a tilting mechanism in a pre-mounted state of the panel;
a first fastening element (4) having a release mechanism (22); and
an attachment element (2),
wherein in a completely-mounted state, a rear surface (29) of the panel (1) is in contact with an attachment surface (9) of the attachment element (2),
wherein the first fastening element (4) in the completely-mounted state retains the panel (1) to the attachment element (2), and
wherein the release mechanism includes a screw head actuatable from a front surface of the panel for the purpose of detaching the panel from the attachment element.

11. The wiring cabinet of claim 10, wherein the attachment surface (9) has at least one opening (23), which, in the completely-mounted state, receives the first fastening element (4), and wherein the front surface (13) of the panel (1) has at least one opening (6) located at the second end of the panel (1) for receiving the first fastening element (4).

12. The wiring cabinet of either of claims 10 or 11, wherein the first mounting element (16) is configured as a slot.

13. The wiring cabinet of any of claims 10 through 12, wherein the attachment element (2) defines a main body (11) and includes a first tab (31), a second tab (7), and a third tab (24), the first tab (31) bent from the main body (11) and forming the attachment surface (9), the second and third tabs configured to engage the wiring cabinet to secure the attachment element to the wiring cabinet.

14. The wiring cabinet of claim 13, wherein the second tab (7) is configured to engage a first frame element (32) of the wiring cabinet and the third tab (24) is configured to engage a second frame element (25) of the wiring cabinet, and wherein the third tab (24) includes an opening (5) for receiving a second fastening element to retain the attachment element (2) to the second frame element (25).

15. The wiring cabinet of any of claims 10 through 14, further comprising:
a second fastening element (3), identical to the first fastening element (4), for attaching the attachment element (2) to the wiring cabinet (19).

## Patentansprüche

1. Verfahren zum Demontieren einer Platte (1) in einem vollständig montierten Zustand von einem Kabelschrank (19), wobei die Platte ein erstes Ende und ein zweites Ende aufweist und das Verfahren umfasst:
Drehen eines Schraubenkopfes eines ersten Befestigungselementes (4), um das zweite Ende der Platte von einem Anbringungselement (2) zu lösen, so dass sich die Platte (1) in einem vormontierten Zustand befindet, wobei in dem vollständig montierten Zustand eine hintere Fläche (29) der Platte (1) in Kontakt mit einer Anbringungsfläche (9) des Anbringungselementes (2) ist und das erste Befestigungselement (4) die Platte (1) an dem Anbringungselement (2) an dem zweiten Ende der Platte hält, und wobei in dem vormontierten Zustand die Platte relativ zu dem Kabelschrank gedreht werden kann; sowie
Demontieren eines ersten Montageelementes (16), das sich an dem ersten Ende der Platte (1) befindet, von einem zweiten Montageelement (14) des Kabelschranks (19), um die Platte von dem Kabelschrank zu demontieren, von dem vormontierten Zustand ausgehend.

2. Verfahren nach Anspruch 1, wobei die Anbringungsfläche (9) des Anbringungselementes (2) wenigstens eine Öffnung (23) hat, die zum Aufnehmen des ersten Befestigungselementes (4) geeignet ist, und eine vordere Fläche (13) der Platte (1) wenigstens eine an dem zweiten Ende der Platte befindliche Öffnung (6) zum Aufnehmen des ersten Befestigungselementes hat.

3. Verfahren nach einem der Ansprüche 1 oder 2, wobei das erste Befestigungselement (4) eine Einrast-Befestigungsvorrichtung mit einem Lösemechanismus (12, 22) ist und der Lösemechanismus über den Schraubenkopf von einer vorderen Fläche (13) der Platte (1) aus betätigt werden kann.

4. Verfahren nach einem der Ansprüche 1 bis 3, das des Weiteren umfasst:
Drehen eines Schraubenkopfes eines zweiten Befestigungselementes (3) zum Lösen des Anbringungselementes (2) von einem Rahmenelement (25) des Kabelschranks (19).

5. Verfahren nach Anspruch 4, wobei Lösen des Anbringungselementes (2) von dem Rahmenelement (25) des Kabelschranks (19) Entfernen des zweiten Befestigungselementes (3) aus einer zweiten Öffnung (5) des Anbringungselementes (2) einschließt.

6. Verfahren nach einem der Ansprüche 4 oder 5, wobei das erste Befestigungselement (4) und das zweite Befestigungselement (3) jeweils durch Blattfedern (30) vorgespannt werden.

7. Verfahren nach einem der Ansprüche 1 bis 6, wobei die Anbringungsfläche (9) des Anbringungselementes (2) durch eine erste Lasche (31) gebildet wird, die um 90° an einen Hauptkörper (11) des Anbringungselementes (2) gebogen ist.

8. Verfahren nach Anspruch 7, wobei das Anbringungselement (2) eine zweite Lasche (7) mit einer Nase (8) zum Halten des Anbringungselementes (2) an einem ersten Rahmenelement (32) des Kabelschranks (19) einschließt.

9. Verfahren nach Anspruch 8, wobei das Anbringungselement (2) eine dritte Lasche (24) zum Einschränken von Bewegung des Anbringungselementes (2) relativ zu dem Kabelschrank (19) enthält.

10. Kabelschrank (19), der umfasst,
eine Platte (1) mit einem ersten Ende und einem zweiten Ende;
ein erstes Montageelement (16), das sich an dem ersten Ende der Platte befindet;
ein zweites Montageelement (14) des Kabelschranks (19), wobei das erste Montageelement und das zweite Montageelement in einem vormontierten Zustand der Platte als ein Kippmechanismus zusammenwirken;
ein erstes Befestigungselement (4) mit einem Lösemechanismus (22); sowie
ein Anbringungselement (2),
wobei in einem vollständig montierten Zustand eine hintere Fläche (29) der Platte (1) in Kontakt mit einer Anbringungsfläche (9) des Anbringungselementes (2) ist,
das erste Befestigungselement (4) in dem vollständig montierten Zustand die Platte (1) an dem Anbringungselement (2) hält, und
der Lösemechanismus einen Schraubenkopf einschließt, der von einer vorderen Fläche der Platte aus betätigt werden kann, um die Platte von dem Anbringungselement zu demontieren.

11. Kabelschrank nach Anspruch 10, wobei die Anbringungsfläche (9) wenigstens eine Öffnung (23) hat, die in dem vollständig montierten Zustand das erste Befestigungselement (4) aufnimmt, und die vordere Fläche (13) der Platte (1) wenigstens eine an dem zweiten Ende der Platte (1) befindliche Öffnung (6) zum Aufnehmen des ersten Befestigungselementes (4) hat.

12. Kabelschrank nach einem der Ansprüche 10 oder 11, wobei das erste Montageelement (16) als ein Schlitz ausgeführt ist.

13. Kabelschrank nach einem der Ansprüche 10 bis 12, wobei das Anbringungselement (2) einen Hauptkörper (11) aufweist und eine erste Lasche (31), eine zweite Lasche (7) sowie eine dritte Lasche (24) enthält, die erste Lasche (31) von dem Hauptkörper (11) weg gebogen ist und die Anbringungsfläche (9) bildet, die zweite und die dritte Lasche so ausgeführt sind, dass sie mit dem Kabelschrank in Eingriff sind, um das Anbringungselement an dem Kabelschrank zu sichern.

14. Kabelschrank nach Anspruch 13, wobei die zweite Lasche (7) so ausgeführt ist, dass sie mit einem ersten Rahmenelement (32) des Kabelschranks in Eingriff ist, die dritte Lasche (24) so ausgeführt ist, dass sie mit einem zweiten Rahmenelement (25) des Kabelschranks in Eingriff ist, und die dritte Lasche (24) eine Öffnung (5) zum Aufnehmen eines zweiten Befestigungselementes enthält, um das Anbringungselement (2) an dem zweiten Rahmenelement (25) zu halten.

15. Kabelschrank nach einem der Ansprüche 10 bis 14, der des Weiteren umfasst:
ein zweites Befestigungselement (3) zum Anbringen des Anbringungselementes (2) an dem Kabelschrank (19), das mit dem ersten Befestigungselement (4) identisch ist.

## Revendications

1. Procédé de détachement d'un panneau (1) dans un état complètement monté d'une armoire de câblage (19), le panneau définissant une première extrémité et une deuxième extrémité, le procédé comprenant :
rotation d'une tête de vis d'un premier élément de fixation pour libérer la deuxième extrémité du panneau d'un élément d'attache (2) de sorte que le panneau (1) soit dans un état pré-monté, dans lequel dans l'état complètement monté, une surface arrière (29) du panneau (1) est en contact avec une surface d'attache (9) de l'élément d'attache (2) et le premier élément de fixation (4) retient le panneau (1) sur l'élément d'attache (2) à la deuxième extrémité du panneau, et dans lequel dans l'état pré-monté le panneau est mobile en rotation par rapport à l'armoire de câblage ; et
depuis l'état pré-monté, détachement d'un premier élément de montage (16) situé à la première extrémité du panneau (1) d'un deuxième élément de montage (14) de l'armoire de câblage (19) pour détacher le panneau de l'armoire de câblage.

2. Le procédé de la revendication 1, dans lequel la surface d'attache (9) de l'élément d'attache (2) présente au moins une ouverture (23) adaptée pour recevoir le premier élément de fixation (4), et dans lequel une surface avant (13) du panneau (1) présente au moins une ouverture (6) située à la deuxième extrémité du panneau pour recevoir le premier élément de fixation.

3. Le procédé de la revendication 1 ou 2, dans lequel le premier élément de fixation (4) est un bouton-pression présentant un mécanisme de libération (12, 22), et dans lequel le mécanisme de libération est actionnable via la tête de vis depuis une surface avant (13) du panneau (1) .

4. Le procédé de l'une quelconque des revendications 1 à 3, comprenant en outre :
rotation d'une tête de vis d'un deuxième élément de fixation (3) pour libérer l'élément d'attache (2) d'un élément de structure (25) de l'armoire de câblage (19).

5. Le procédé de la revendication 4, dans lequel la libération de l'élément d'attache (2) de l'élément de structure (25) de l'armoire de câblage (19) inclut un retrait du deuxième élément de fixation (3) d'une deuxième ouverture (5) de l'élément d'attache (2).

6. Le procédé de la revendication 4 ou 5, dans lequel chacun du premier élément de fixation (4) et du deuxième élément de fixation (3) est pré-tendu par des ressorts à lames (30).

7. Le procédé de l'une quelconque des revendications 1 à 6, dans lequel la surface d'attache (9) de l'élément d'attache (2) est constituée par une première patte (31), qui est courbée à 90 degrés contre un corps principal (11) de l'élément d'attache (2).

8. Le procédé de la revendication 7, dans lequel l'élément de rattachement (2) inclut une deuxième patte (7) présentant un ergot (8) pour retenir l'élément de rattachement (2) sur un premier élément de structure (32) du cabinet de câblage (19).

9. Le procédé de la revendication 8, dans lequel l'élément d'attache (2) inclut une troisième patte (24) pour restreindre un mouvement de l'élément d'attache (2) par rapport à l'armoire de câblage (19).

10. Armoire de câblage (19) comprenant,
un panneau (1) présentant une première extrémité et une deuxième extrémité ;
un premier élément de montage (16) situé à la première extrémité du panneau ;
un deuxième élément de montage (14) de l'armoire de câblage (19), le premier élément de montage et le deuxième élément de montage interagissant comme un mécanisme de basculement dans un état pré-monté du panneau ;
un premier élément de fixation (4) présentant un mécanisme de libération (22) ; et
un éléments d'attache (2),
dans laquelle dans un état complètement monté, une surface arrière (29) du panneau (1) est en contact avec une surface d'attache (9) de l'élément d'attache (2),
dans laquelle le premier élément de fixation (4) dans un état complètement monté retient le panneau (1) sur l'élément d'attache (2), et
dans lequel le mécanisme de libération inclut une tête de vis actionnable depuis une surface avant du panneau avec pour objet de détacher le panneau de l'élément d'attache.

11. L'armoire de câblage de la revendication 10, dans laquelle la surface d'attache (9) présente au moins une ouverture (23), qui, dans l'état complètement monté, reçoit le premier élément de fixation (4), et dans laquelle la surface avant (13) du panneau (1) présente au moins une ouverture (6) située à la deuxième extrémité du panneau (1) pour recevoir le premier élément de fixation (4).

12. L'armoire de câblage de la revendication 10 ou 11, dans laquelle le premier élément de montage (16) est configuré comme un logement.

13. L'armoire de câblage de l'une quelconque des revendications 10 à 12, dans laquelle l'élément d'attache (2) définit un corps principal (11) et inclut une première patte (31), une deuxième patte (7) et une troisième patte (24), la première patte (31) courbée depuis le corps principal (11) et formant la surface d'attache (9), les deuxième et troisième pattes configurées pour entrer en contact avec l'armoire de câblage pour fixer l'élément d'attache à l'armoire de câblage.

14. L'armoire de câblage de la revendication 13, dans laquelle la deuxième patte (7) est configurée pour entrer en contact avec un premier élément de structure (32) de l'armoire de câblage et la troisième patte (24) est configurée pour entrer en contact avec un deuxième élément de structure (25) de l'armoire de câblage, et dans laquelle la troisième patte (24) inclut une ouverture (5) pour recevoir un deuxième élément de fixation pour retenir l'élément d'attache (2) au deuxième élément de structure (25).

15. L'armoire de câblage de l'une quelconque des revendications 10 à 14, comprenant en outre :
un deuxième élément de fixation (3), identique au premier élément de fixation (4), pour rattacher l'élément d'attache (2) à l'armoire de câblage (19).
